# FASCICULE DE BREVET EUROPEEN

(11) **EP 2 247 227 B1**
(45) Date de publication et mention de la délivrance du brevet: **20.02.2013**
(21) Numéro de dépôt: 09720082.8
(22) Date de dépôt: 04.03.2009
(51) Int. Cl.: A47J 37/06

(54) **APPAREIL DE CUISSON D'UN PRODUIT ALIMENTAIRE**
ANWENDUNG ZUM KOCHEN EINES NAHRUNGSMITTELPRODUKTS
APPLIANCE FOR COOKING A FOOD PRODUCT

(30) Priorité: 04.03.2008 FR 0851385
(43) Date de publication de la demande: 10.11.2010
(73) Titulaire: Krampouz, 29700 Pluguffan (FR)
(72) Inventeur: KERGOAT, Serge, F-29900 Concarneau (FR)
(74) Mandataire: Regimbeau
(86) Numéro de dépôt international: PCT/EP2009/052537
(87) Numéro de publication internationale: WO 2009/112405

(56) Documents cités:
- WO-A-2005/107538
- WO-A-2007/051294
- US-A- 3 068 778
- US-A- 6 130 416

## Description

La présente invention concerne un appareil de cuisson d'un produit alimentaire, qui comprend une paire de plaques en matériau thermiquement bon conducteur qui sont chauffées électriquement et articulées l'une à l'autre, chacune de ces plaques possédant une face de cuisson, les deux faces de cuisson pouvant être rapprochées l'une de l'autre par rabattement d'une plaque contre l'autre afin de cuire un produit alimentaire enserré entre elles.

L'invention a été conçue pour la réalisation d'un gaufrier électrique, notamment à usage professionnel. Elle peut trouver cependant diverses autres applications pour la cuisson de produits variés.

Le document WO 2007/051294 A1 montre un appareil selon l'art antérieur. Un gaufrier électrique à usage professionnel traditionnel comporte des plaques de cuisson en fonte, appelés « fers », de forme généralement rectangulaire, dont la face de cuisson présente une ou plusieurs empreintes composées de plots en relief et de cavités permettant de conférer à la gaufre la configuration désirée.

Sur certains modèles, on peut faire pivoter ces plaques l'une part rapport à l'autre sur un angle plat, à 180°, les deux plaques de cuisson se situant alors dans un plan horizontal commun. Sur d'autres modèles - dits à « 90° » - le pivotement d'une plaque se fait seulement sur un peu plus de l'angle droit, et la pâte est déposée sur l'autre plaque de cuisson, restée horizontale.

Certains appareils, de plus, sont conçus pour pouvoir être retournés à l'état fermé sur un angle de 180°, de sorte que la pâte peut se répartir correctement dans l'espace séparant les deux plaques, ce qui est utile notamment pour la cuisson de pâtes relativement fluides.

En général, le gaufrier comporte un socle -ou châssis- fixe, par exemple en acier inoxydable, sur lequel sont montées et/ou articulées lesdites plaques. Ce socle peut être ainsi conformé que chacune desdites plaques peut être rabattue à plat sur celui-ci, seule et/ou conjointement avec l'autre plaque, de façon à prendre appui contre ledit socle par sa face dorsale, dans une position horizontale.

Sur d'autres modèles un boîtier contenant les organes d'alimentation électrique et de régulation thermique est solidaire de l'une des plaques; il est connecté électriquement à chacune des plaques chauffantes, soit directement, soit au moyen d'un câble flexible qui autorise le libre pivotement à l'ouverture de la plaque en question.

La présente invention est applicable à ces différents modèles.

Sur les appareils connus de ce genre, la face -dite dorsale- opposée à la face de cuisson de chacune des plaques présente un renfoncement (évidement) à fond plat de surface étendue, à l'intérieur duquel est montée une résistance électrique chauffante.

Il s'agit généralement d'une bande plate et mince en métal conducteur (alliage nickel-chrome par exemple) déposée sur une plaque mince de matériau électrique isolant, usuellement à base de mica. Cette plaque peut être intercalée entre deux plaques minces isolantes similaires.

C'est cette structure multicouche qui est insérée dans le renfoncement précité.

Y est logée également une garniture souple en matériau isolant thermique, qui recouvre la structure chauffante à base de mica.

L'ouverture du renfoncement est généralement obturée par une plaque de fermeture en tôle, fixée au moyen de vis au dos du fer. Cette plaque comprime légèrement la couche de matériau isolant dans le but d'appliquer ladite structure multicouche avec un certain degré de serrage contre la paroi du fer de manière à assurer un bon transfert de la chaleur.

Un appareil de ce genre présente un certain nombre d'inconvénients.

A l'usage, de l'huile chaude, ou d'autres corps gras chauds, utilisés pour badigeonner les surfaces de cuisson ont tendance à s'infiltrer au dos des plaques et à corroder la structure multicouche et la résistance électrique, ce qui altère les qualités isolantes de la structure et, à terme, provoque des courts-circuits.

Les corps gras imprègnent en outre la couche de garniture thermiquement isolante, qui finit par s'écraser et s'avachir au fil du temps, de sorte qu'elle perd ses capacités d'isolation et que la structure chauffante n'est plus appliquée correctement ni de façon homogène contre le dos du fer. Le transfert thermique est alors mauvais.

Par ailleurs, de la pâte (plus ou moins liquide) arrive à passer dans l'interstice entre le bord périphérique de la plaque de fermeture et le rebord du renfoncement, et cet interstice peut se trouver colmaté par une croûte de pâte, ce qui n'est guère satisfaisant sur le plan de l'hygiène.

La présente invention a pour but de pallier ces difficultés.

A cet effet, conformément à l'invention, un module chauffant de forme complémentaire de celle dudit renfoncement est emboîté et fixé de manière amovible à l'intérieur de celui-ci, ce module étant pourvu d'une résistance électrique blindée apte à chauffer ladite plaque lorsqu'elle est alimentée en courant électrique.

Une résistance électrique blindée comprend un fil électrique à résistance élevée qui est noyé dans matériau isolant diélectrique mais thermiquement bon conducteur, l'ensemble étant logé dans une gaine protectrice tubulaire, qui en assure l'étanchéité.

En raison du caractère amovible de ce module chauffant, il est aisé de le retirer périodiquement du renfoncement, permettant d'avoir ainsi libre accès à toute la face dorsale du fer, y compris au renfoncement, ce qui permet de la nettoyer convenablement.

La fiabilité et la durée de vie d'un tel appareil sont considérablement accrues par rapport à celles des appareils traditionnels.

Selon d'autres caractéristiques
- ledit module a la forme d'une cassette plate, de faible épaisseur;
- ledit module a une structure en « sandwich » comprenant, du fond du renfoncement vers l'extérieur :
   - une tôle de répartition de chaleur en matériau ayant une bonne conductibilité thermique, par exemple en aluminium ;
   - ladite résistance électrique blindée ;
   - une tôle de plaquage de la résistance contre la tôle de répartition de chaleur ;
   - une plaque en matériau thermiquement isolant ;
   - une tôle de fermeture ;
      ces différents composants étant assemblés les uns aux autres de manière démontable, par exemple au moyen de vis ;
      - ladite plaque en matériau thermiquement isolant a une épaisseur calibrée et constante
      - l'appareil comporte un socle sur lequel sont montées et articulées lesdites plaques autour d'un axe qui coïncide avec leur axe mutuel d'articulation ;
      - ce socle est ainsi conformé que chacune des plaques peut être rabattue à plat sur celui-ci, seule et/ou conjointement avec l'autre plaque, de façon à prendre appui contre ledit socle par sa face dorsale, dans une position horizontale ;
      - le socle est pourvu de moyens de contrôle et de réglage de l'alimentation électrique des résistances de chacune des plaques, ces moyens étant connectés à chacun desdits modules par un câblage flexible qui ne contrarie ni le pivotement des plaques ni l'enlèvement des modules hors de leur renfoncement ;
      - au moins un module est muni d'une sonde de température apte à se loger dans une rainure réceptrice de forme complémentaire ménagée dans le fond dudit renfoncement lorsque le module est emboîté dans celui-ci et fixé à la plaque de cuisson ;
      - chacun des modules est fixé à la plaque de cuisson au moyen de vis et est appliqué avec un certain degré de serrage contre le fond du renfoncement.

Un tel appareil est avantageusement destiné à la cuisson d'une pâte alimentaire à base de farine pour la confection de gaufres, les faces de cuisson des plaques étant pourvue d'empreintes adaptées à cette fin.

Diverses applications différentes sont néanmoins envisageables, par exemple pour la cuisson de tranches de viande ou de poisson.

D'autres caractéristiques et avantages de l'invention apparaîtront à la lecture de la description suivante d'un mode de réalisation possible de l'invention.

Cette description est faite en référence aux dessins annexés dans lesquels :
Les figures 1 et 2 sont des vues schématiques et en perspective d'un mode de réalisation possible d'un appareil conforme à l'invention, vu sous des angles différents ;
la figure 3 est une vue éclatée en perspective montrant les différents composants d'un module chauffant.

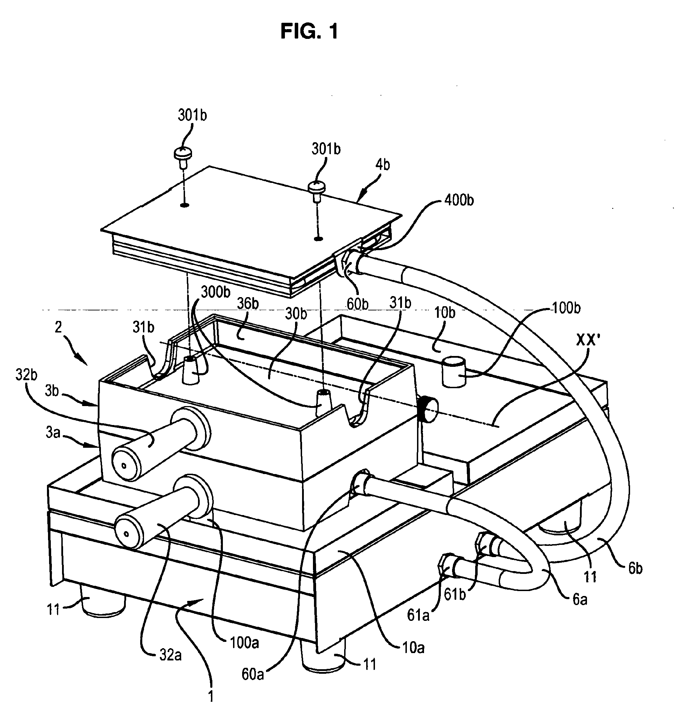

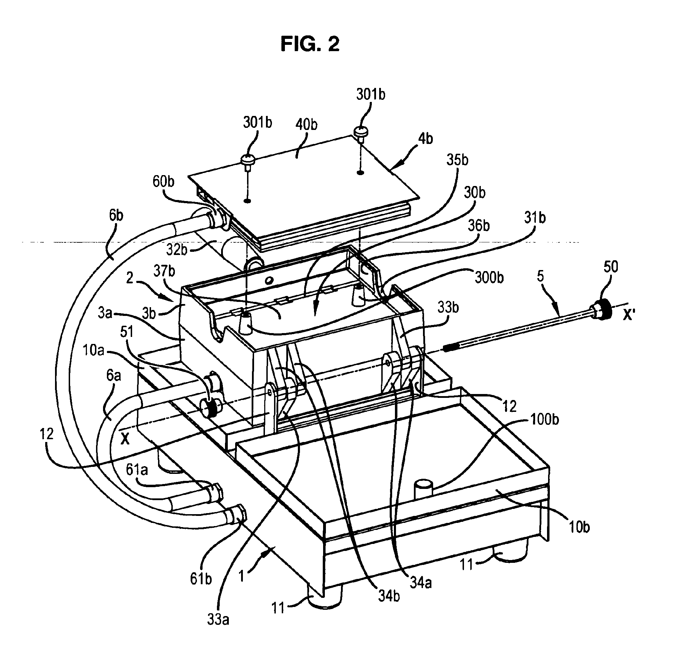

L'appareil représenté sur les figures 1 et 2 comprend un socle 1 constitué par un boîtier parallélépipédique rectangle, relativement plat, monté sur pieds 11 et formant une sorte de plan de travail horizontal.

Ce socle supporte une paire de demi-ensembles identiques, dont les chiffres de référence des composants de l'un ont été affectées de l'indice « a » et ceux de l'autre de l'indice « b ».

Sur la figure 1, qui représente des composants susceptibles d'appartenir indifféremment à l'un ou l'autre de ces demi-ensembles, il n'a pas été utilisé d'indice.

Dans sa zone centrale, la face supérieure rectangulaire du socle 1 est pourvue d'une paire de tiges plates, ou pattes, 12 traversées par un orifice servant au passage d'une tige amovible 5 formant axe d'articulation X-X', de direction horizontale et transversale, c'est-à-dire perpendiculaire aux grands côtés du socle 1.

De part et d'autre des pattes 12, la face supérieure du socle 1 supporte une paire de bacs rectangulaires identiques 10a, 10b à fond plat pourvus d'un rebord périphérique de faible épaisseur ; ils sont dimensionnés de manière à recouvrir sensiblement une moitié de la face supérieure du socle 1.

Ces bacs sont amovibles.

Leur fond est pourvu d'un petit plot cylindrique 100a, respectivement 100b, dirigé vers le haut et situé sur le petit axe de symétrie du bac, à proximité du bord externe correspondant à un grand côté du bac (et à un petit côté du socle).

L'appareil comprend un moule de cuisson 2 constitué d'une paire de plaques de cuisson, ou fers 3a, 3b, identiques, de forme rectangulaire, en matériau ayant une bonne conductibilité thermique et une inertie thermique élevée, par exemple en fonte.

Ils possèdent des ferrures 33a-34a et, respectivement, 33b-34b qui constituent des chapes d'articulation aptes à assurer l'articulation des fers 3a, 3b à la fois l'un à l'autre, à la manière de deux coquilles, ainsi que sur le socle 1 (par l'intermédiaire des pattes 12), autour de l'axe X-X' -matérialisé-par la tige 5. On observera que cette dernière possède un bouton de manoeuvre 50 et une portion d'extrémité filetée sur laquelle peut être vissé un écrou 51.

Sur les figures 1 et 2, le moule 2 est représenté fermé, les faces de cuisson, pourvues d'empreintes appropriées (gaufrées), des fers n'étant par conséquent pas visibles.

Le fer 3b se trouve placé au-dessus du fer 3a.

Au dos de chacun de ces fers 3 est ménagé un renfoncement rectangulaire 30 à fond plat, délimité par un rebord périphérique 36.

Au niveau de la zone centrale de chaque petit côté, ce rebord possède une encoche 31 approximativement semi-circulaire, dont l'ouverture est tournée vers l'extérieur (vers le haut si on considère la position du fer 3b).

Au niveau de la zone centrale de l'un de ses grands côtés, le rebord 36 est traversé par un trou taraudé 320 servant au montage, par vissage, d'une poignée de manoeuvre 32 pour l'ouverture ou la fermeture du moule 2.

Comme on le voit sur la figure 2, une petite rainure globalement semi-cylindrique 35b est creusée dans le fond 37b au voisinage de son grand côté extérieur, parallèlement à celui-ci. Ce fond 37b est solidaire d'une paire de cheminées 300b, dont l'axe est perpendiculaire à son plan, et qui présentent chacune un trou axial taraudé ; la fonction de ces cheminées est de permettre la fixation, de manière facilement démontable, du module 4b dans le renfoncement 30b au moyen d'une paire de vis 301b.

Les dimensions en longueur et en largeur des fers 3 sont légèrement plus petites que celles des bacs 10.

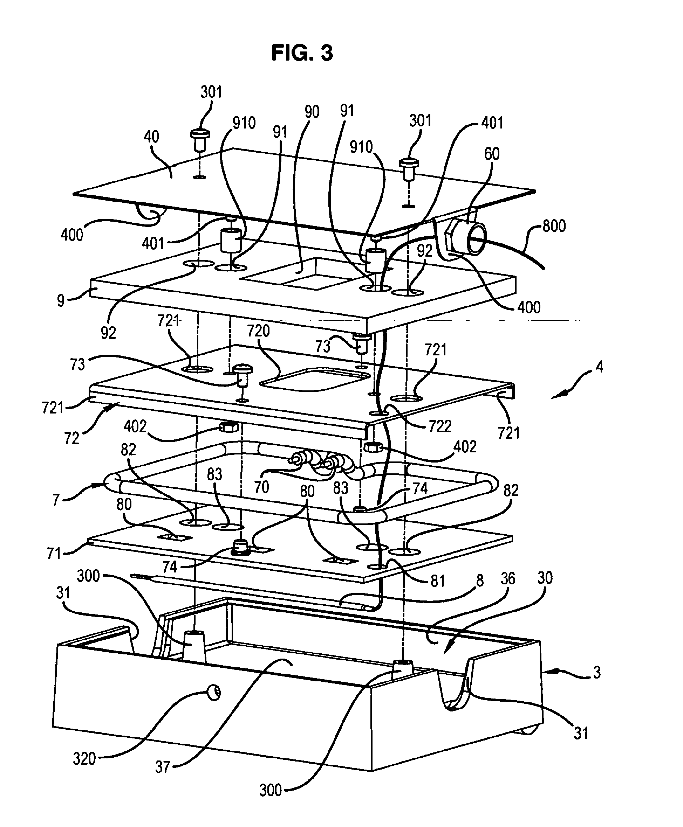

En nous référant plus particulièrement à la figure 3, nous allons maintenant décrire la structure d'un module chauffant 4 adapté pour s'emboîter dans le renfoncement 30 d'un fer 3.

Cette structure « en sandwich » comprend, depuis le fond 30 vers l'extérieur :
- une tôle en aluminium 71 ;
- une résistance électrique blindée 7 ;
- une tôle 72, par exemple en acier inoxydable, à bords 721 rabattus le long de ses grands côtés, et dont la fonction est de plaquer la résistance contre la tôle 71 ;
- une plaque 9 en matériau thermiquement isolant, par exemple à base de fibres de verre ou de laine de roche, contenant un certain volume d'air (remarquablement isolant) et résistant à haute température;
- une tôle de fermeture 40, par exemple en acier inoxydable ayant une bonne élasticité.

La tôle 71, la tôle 72, ainsi que la plaque 9 ont des contours rectangulaires de mêmes dimensions, égales -au jeu d'emboîtement près- à celles du contour de la paroi interne de l'évidement 30.

La résistance blindée 7 est un élément de section circulaire, présentant une forme générale rectangulaire, sensiblement homothétique de celle des tôles 71 et 72 entre lesquelles elle est enserrée, mais de dimensions plus faibles.

La référence 70 désigne les cosses de connexion électrique de la résistance 7.

La tôle de fermeture 40 présente également un contour rectangulaire, homothétique de celui des tôles 71, 72 et de la plaque isolante 9, mais de dimensions légèrement plus grandes. En effet, cette tôle est ainsi dimensionnée qu'en position de fermeture son bord périphérique vient prendre appui contre le chant du rebord 36 du renfoncement 30. De plus, les bords latéraux correspondant aux petits côtés de la tôle 40 sont pourvus d'oreilles rabattues à angle droit 400 aptes à venir s'insérer dans les encoches 31 dont il a été fait état plus haut, permettant ainsi une protection et une isolation de l'espace intérieur de l'évidement 30 lorsque le module 4 y est emboîté et fixé. L'une des oreilles 400 est munie d'un petit manchon 60 permettant la traversée de câbles électriques.

Sur la figure 3, la référence 8 désigne une sonde de température.

Celle-ci, de type connu, est un bulbe consistant en une tige rectiligne reliée à un thermostat (non représenté) commandant et contrôlant la température, situé à l'intérieur du socle 1, par l'intermédiaire d'un conduit capillaire 800.

La valeur de la pression de fluide dans le capillaire est fonction de la température de la plaque de cuisson, et commande le thermostat pour arrêter l'alimentation électrique de la résistance 7 au-délà d'une valeur-seuil de température donnée (réglable).

Inversement, l'alimentation redémarre lorsque la température est trop basse.

La tôle 71 présente des découpes embouties 80, avec repoussage de la matière (crevés), qui forment des languettes d'agrafage aptes à retenir la sonde 8 sous la tôle. La sonde 8 est ainsi positionnée et dimensionnée qu'elle vient se loger dans la rainure 35 prévue au dos du fer lorsque le module 4 est complètement inséré dans le renfoncement 30. On obtient ainsi un contact intime de la sonde avec la matière du fer 3, ce qui permet d'obtenir une mesure précise et fidèle de sa température.

Des orifices appropriés 81 et 722 percés dans les tôles 71 et, respectivement, 72, autorisent le passage du capillaire 800, lequel ressort du module 4 via le manchon 60.

Sur la figure 3 on n'a pas représenté, afin de ne pas alourdir inutilement cette figure, et de ne pas en affecter la lisibilité, le câblage électrique de la résistance 7. Celle-ci est alimentée en courant électrique par une paire de conducteurs qui traversent également le manchon 60, passent dans des fenêtres appropriées 90 et 720 ménagées à cet effet dans la plaque 9 et, respectivement, dans la tôle 72, et sont connectés chacun à l'une des cosses 70.

Ces conducteurs sont branchés à leur autre extrémité, à une unité d'alimentation et de contrôle électrique située à l'intérieur du socle 1, et pouvant être commandée, de façon connue, à la fois volontairement, au moyen d'organes de réglage ad hoc, tels que des boutons ou des touches montés sur la façade du socle, et automatiquement grâce au thermostat.

Les câbles électriques reliant le socle 1 à chacun des modules 4a et 4b sont logés dans des gaines protectrices flexibles 6a, 6b, suffisamment souples et longues pour ne pas contrarier les mouvements des fers 3a, 3b en cours d'usage, ni empêcher l'enlèvement des modules hors de leur logement, étant précisé que ces modules demeurent normalement reliés en permanence au socle 1 par l'intermédiaire desdites gaines.

Sur les figures 1 et 2, les références 61a et 61b désignent des manchons de raccordement des gaines 6a et 6b au socle 1.

L'assemblage des différents composants d'un module chauffant 4 se fait comme expliqué ci-après.

On réalise tout d'abord un premier sous-ensemble en solidarisant les tôles 72 et 71, avec prise en sandwich de la résistance blindée 7 entre ces deux tôles. Cette liaison est obtenue à l'aide d'une paire de vis 73 et d'écrous sertis 74.

Les rebords rabattus 721 de la tôle 72 assurent une protection e la résistance 7 qui se trouve, en quelque sorte, encapsulée entre les deux tôles 71 et 72.

Ce sous-ensemble est ensuite fixé à la tôle de fermeture 40, avec intercalation de la plaque isolante 9.

A cet effet, la face interne de la tôle 40 est solidaire d'une paire de tiges filetées 401 (goujons par exemple), qui traversent des entretoises tubulaires 910 insérées dans des trous 91 de la plaque 9, et sur lesquelles sont vissés des écrous 402 disposés contre la face interne de la tôle 72. Des trous 83 prévus dans la tôle 71 permettent à d'accéder aux écrous 402 au moyen d'un outil, tel qu'une clé à pipe par exemple, pour les serrer ou les desserrer.

La sonde 8 ayant été agrafée contre la face interne de la plaque 71, il ne reste plus qu'à emboîter le module 4 dans le renfoncement 30 et à le solidariser du fer 3 au moyen des vis 301.

Celles-ci traversent des ouvertures appropriées 92, 721 et 82 prévues à cet effet dans la plaque 9, dans la tôle 72 et, respectivement, dans la tôle 71, et se vissent dans les cheminées 300.

En fin de vissage le bord périphérique de la plaque de fermeture 40 vient porter contre le chant libre du rebord 36 du fer 3, tandis que les oreilles 400 obturent les encoches latérales 31, de sorte qu'on obtient un ensemble fermé et quasi hermétique, protégé des éclaboussures et des coulées de pâte.

Les entretoises 910 calibrent l'espacement des tôles 40 et 72, de sorte qu'à aucun moment la plaque isolante 9 n'est écrasée ; celle-ci demeure par conséquent aérée et conserve en permanence ses propriétés d'isolation thermique.

En fin de vissage « à fond » des vis 301 dans les cheminées 300, les tiges de ces vis sont mises sous tension, grâce à la déformation élastique des zones de la plaque 40 qui se trouvent sous les têtes de vis.

Ainsi, la tôle de répartition de chaleur 71 se trouve repoussée et appliquée avec une certaine pression contre le fond 37 du renfoncement 30, ce qui garantit un bon transfert thermique de la résistance 7 au fer 3 par l'intermédiaire de cette tôle.

En cours d'utilisation du moule à gaufre, lorsqu'un fer 3 est rabattu à plat sur le socle, il vient porter par l'intermédiaire de sa tôle de fermeture contre une butée 100.

La hauteur des butées 100a, 100b est déterminée pour que la face de cuisson du fer considéré soit alors sensiblement horizontale. Les débordements et coulées de pâte intempestifs sont recueillis dans les bacs amovibles 10, que l'on peut vider et laver lorsque cela est nécessaire.

La cuisson d'une pâte alimentaire, par exemple d'une pâte à gaufres, se fait de la même manière qu'avec un appareil classique.

Les fers sont chauffés à la température souhaitée, qui est régulée par le thermostat.

Le gaufrier étant ouvert à 180°, on dépose et on répartit la dose de pâte nécessaire sur l'une des deux faces de cuisson. Cette pâte, en fonction de la recette, est plus ou moins fluide. En cas de débordement, le surplus est recueilli dans le bac 10a ou 10b que surplombe le fer 3a ou 3b sur laquelle la dose est déposée.

On rabat ensuite l'autre fer sur le premier, par pivotement à 180°, de sorte que la pâte est mise en forme entre les empreintes des deux faces de cuisson en vis-à-vis, en même temps que commence la cuisson. On fait basculer ensuite en bloc les deux fers (moule fermé) en sens inverse afin de bien répartir la pâte dans les cavités des deux empreintes en regard.

Grâce à la présence des tôles de répartition de chaleur 71 et du fait que celles-ci sont appliquées avec une certaine pression contre l'âme des fers 3, la température est uniforme sur les deux faces de cuisson, et la cuisson est parfaitement homogène.

La présence de la plaque 9 thermiquement isolante évite les déperditions de chaleur et garantit que la tôle de fermeture externe 40 ne subisse pas d'élévation de température importante qui constituerait un risque de brûlure pour l'opérateur. Comme déjà dit, cette plaque conserve en permanence la même épaisseur et corrélativement ses capacités d'isolation.

En fin de cuisson, on ouvre le gaufrier et on enlève la(les) gaufre(s) cuite(s).

Il est aisé en outre de nettoyer et de laver les fers 3a et 3b, si nécessaire ou systématiquement de manière périodique. Il suffit pour cela de désolidariser de chacun des fers son module chauffant 4 (par dévissage des vis 301), et de retirer la tige d'axe 5.

Chaque fer peut alors être nettoyé et lavé, par exemple dans un lave-vaisselle.

Les modules 4a et 4b, quant à eux restent attenants au socle 1 par l'intermédiaire des câbleries souples 6a et 6b. Leur conformation sous forme de cassette rectangulaire et plate favorise leur maniement.

Après lavage et séchage, il est facile de remonter l'appareil, par des opérations inverses. Les deux bacs 10a, 10b, tout comme les deux fers 3a, 3b, sont identiques et donc interchangeables, ce qui évite tout risque d'erreur au cours de ce remontage.

A titre d'exemple purement indicatif, un module chauffant 4 a une longueur de 185 mm environ, une largeur de 150 mm environ, et une épaisseur de 20 mm environ.

Chaque résistance a une puissance de 900 W est alimentée par un courant alternatif de 230 V.

Sa température maximale est de l'ordre de 600°C environ. La température au niveau de la sonde 8, régulée par le thermostat, s'inscrit dans une fourchette de 50 à 300°C.

Une même face de cuisson est avantageusement pourvue de plusieurs empreintes, par exemple de deux ou de quatre empreintes permettant de cuire simultanément deux ou quatre gaufres.

Les empreintes peuvent être amovibles et interchangeables, ce qui permet d'utiliser l'appareil pour la confection de catégories de gaufres différentes.

Comme indiqué plus haut, l'invention s'applique tout aussi bien à des appareils dont les plaques ont un pivotement mutuel dit « à 90° » et/ou dépourvu d'un socle fixe, notamment à des appareils sur lesquels le boîtier de commande et de réglage est solidaire de l'une des deux plaques.

Dans ce cas, ledit boîtier est avantageusement monté directement sur la face dorsale du module chauffant amovible qui équipe cette plaque, et est connecté à l'autre plaque par un flexible.

## Revendications

1. Appareil de cuisson d'un produit alimentaire, qui comprend une paire de plaques (3a, 3b) en matériau thermiquement bon conducteur qui sont chauffées électriquement et articulées l'une à l'autre, chacune de ces plaques possédant une face de cuisson, les deux faces de cuisson pouvant être rapprochées l'une de l'autre par rabattement d'une plaque contre l'autre afin de cuire un produit alimentaire enserré entre elles, la face -dite dorsale- opposée à la face de cuisson de chacune de ces plaques présentant un renfoncement (30), à fond plat (37) de surface étendue, un module chauffant (4) en forme de cassette plate, de faible épaisseur, complémentaire de celle dudit renfoncement (30) étant emboîté et fixé de manière amovible à l'intérieur de ce renfoncement, ce module (4) étant pourvu d'une résistance électrique blindée (7) apte à chauffer ladite plaque (3) lorsqu'elle est alimentée en courant électrique, et ayant une structure en « sandwich » comprenant, du fond du renfoncement vers l'extérieur, au moins les composants suivants :
- une tôle de répartition de chaleur (71) en matériau ayant une bonne conductibilité thermique, par exemple en aluminium ;
- ladite résistance électrique blindée (7) ;
- une tôle (72) de plaquage de la résistance contre la tôle de répartition de chaleur ;
ces composants étant assemblés les uns aux autres de manière démontable, par exemple au moyen de vis,
**caractérisé par le fait qu'**au moins un module (4) est muni d'une sonde de température (8) apte à se loger dans une rainure réceptrice (35) de forme complémentaire ménagée dans le fond (37) dudit renfoncement lorsque le module (4) est emboîté dans celui-ci et fixé à la plaque de cuisson (3).

2. Appareil de cuisson selon la revendication 1, **caractérisé par le fait que** ladite structure en sandwich comprend en outre, à l'extérieur de ladite tôle de plaquage (72), une plaque (9) en matériau thermiquement isolant et une tôle de fermeture (40).

3. Appareil de cuisson selon la revendication 2, **caractérisé par le fait que** ladite plaque (9) en matériau thermiquement isolant a une épaisseur calibrée et constante.

4. Appareil de cuisson selon l'une quelconque des revendications 1 à 3, **caractérisé par le fait qu'**il comporte un socle (1) sur lequel sont montées et articulées lesdites plaques de cuisson (3a, 3b) autour d'un axe (X-X') qui coïncide avec leur axe mutuel d'articulation.

5. Appareil de cuisson selon la revendication 4, **caractérisé par le fait que** ledit socle (1) est ainsi conformé que chacune desdites plaques (3a, 3b) peut être rabattue à plat sur celui-ci, seule et/ou conjointement avec l'autre plaque, de façon à prendre appui contre ledit socle par sa face dorsale, dans une position horizontale.

6. Appareil de cuisson selon la revendication 4 ou la revendication 5, **caractérisé par le fait que** ledit socle (1) est pourvu de moyens de contrôle et de réglage de l'alimentation électrique des résistances (7) de chacune des plaques, ces moyens étant connectés à chacun desdits modules (4) par un câblage flexible (6) qui ne contrarie ni le pivotement des plaques ni l'enlèvement des modules hors de leur renfoncement.

7. Appareil de cuisson selon l'une quelconque des revendications 1 à 6, **caractérisé par le fait que** chacun des modules (4) est fixé à la plaque de cuisson au moyen de vis, et est appliqué avec un certain degré de serrage contre le fond du renfoncement.

8. Appareil de cuisson selon l'une quelconque des revendications 1 à 7, **caractérisé par le fait qu'**il est destiné à cuisson d'une pâte alimentaire à base de farine pour la confection de gaufres, les faces de cuisson des plaques étant pourvues d'empreintes adaptées à cette fin.

## Claims

1. A cooking appliance for a food product, which comprises a pair of plates (3a, 3b) made of thermally conductive material, which are heated electrically and articulated to one another, each of these plates having a cooking surface, the two cooking surfaces being able to be moved towards one another by folding one plate against the other to cook a food product clamped between them, the so-called dorsal face opposite the cooking surface of each of these plates exhibiting a depression (30), with a flat base (37) of extended surface, a heating module (4) in the form of a flat cassette, of minimal thickness, complementary to that of said depression (30), which is fitted and fixed removably inside this depression, this module (4) being provided with a shielded electric resistor (7) for heating said plate (3) when it is supplied with electric current, and having a "sandwich" structure comprising, from the base of the depression to the exterior, at least the following components:
- a heat-distribution sheet (71) made of material having good thermal conductivity, for example aluminium;
- said shielded electric resistor (7);
- a sheet (72) for plating the resistor against the heat-distribution sheet;
these components being assembled together detachably, for example by means of screws;
**characterised in that** at least one module (4) is fitted with a temperature probe (8) capable of being housed in a receiving groove (35) of complementary shape made in the base (37) of said depression when the module (4) fits in the latter and is fixed to the cooking plate (3).

2. The cooking appliance as claimed in Claim 1, **characterised in that** said sandwich structure also comprises, outside said sheet plating metal (72), a plate (9) made of thermally insulating material and a closing sheet (40).

3. The cooking appliance as claimed in Claim 2, **characterised in that** said plate (9) made of thermally insulating material is at a calibrated and constant thickness.

4. The cooking appliance as claimed in any one of Claims 1 to 3, **characterised in that** it comprises a base (1) on which are mounted and articulated said cooking plates (3a, 3b) about an axis (X-X') which coincides with their mutual axis of articulation.

5. The cooking appliance as claimed in Claim 4, **characterised in that** said base (1) corresponds such that each of said plates (3a, 3b) can be folded back flat onto the latter, singly and/or together with the other plate, so as to be supported against said base by its dorsal face, in a horizontal position.

6. The cooking appliance as claimed in Claim 4 or Claim 5, **characterised in that** said base (1) is provided with control and adjustment means of the electric feed of the resistors (7) of each of the plates, these means being connected to each of said modules (4) by flexible cabling (6) which hinders neither the pivoting of the plates nor removal of the modules from their depression.

7. The cooking appliance as claimed in any one of Claims 1 to 7, **characterised in that** each of the modules (4) is fixed to the cooking plate by means of screws, and is applied with a certain degree of tightness against the base of the depression.

8. The cooking appliance as claimed in any one of Claims 1 to 8, **characterised in that** it is intended for cooking a flour-based dough for making waffles, the cooking surfaces of the plates being provided with impressions adapted for this purpose.

## Patentansprüche

1. Gerät zum Garen eines Lebensmittelprodukts, das ein Paar Platten (3a, 3b) aus einem thermisch gut leitfähigen Material umfasst, die elektrisch beheizt werden und aneinander angelenkt sind, wobei jede dieser Platten eine Garfläche aufweist, wobei die zwei Garflächen aneinander herangeführt werden können durch Umklappen einer Platte gegen die andere, um ein Lebensmittelprodukt zwischen ihnen eingespannt zu garen, wobei die - so genannte dorsale - Fläche, die der Garfläche jeder dieser Platten entgegengesetzt ist, eine Vertiefung (30) mit einem flachen großflächigen Boden (37) aufweist, wobei ein Heizelement (4) mit einer zu derjenigen der Vertiefung komplementären Form einer flachen Kassette, mit geringer Dicke, auf lösbare Weise im Innern dieser Vertiefung eingepasst und befestigt ist, wobei dieses Element (4) mit einem eingekapselten elektrischen Widerstand (7) versehen ist, der dafür geeignet ist, die Platte (3) zu erhitzen, wenn er mit elektrischem Strom versorgt wird, und wobei das Element eine sandwichartige Struktur hat, die, vom Boden der Vertiefung nach außen hin, mindestens die folgenden Komponenten umfasst:
- ein Wärmeverteilungsblech (71) aus einem Material mit einer guten thermischen Leitfähigkeit, zum Beispiel aus Aluminium;
- den eingekapselten elektrischen Widerstand (7);
- ein Blech (72) zum Anpressen des Widerstands gegen das Wärmeverteilungsblech (71);
wobei diese Komponenten auf demontierbare Weise, zum Beispiel mit Hilfe von Schrauben, miteinander verbunden sind,
**dadurch gekennzeichnet, dass** mindestens ein Element (4) mit einer Temperatursonde (8) versehen ist, die dafür geeignet ist, in einer Aufnahmenut (35) mit komplementärer Form, die in dem Boden (37) der Vertiefung ausgebildet ist, aufgenommen zu werden, wenn das Element (4) in diese letzte eingepasst und an der Garfläche (3) befestigt ist.

2. Gargerät nach Anspruch 1, **dadurch gekennzeichnet, dass** die sandwichartige Struktur ferner an der Außenseite des Anpressblechs (72) eine Platte (9) aus einem thermisch isolierenden Material und ein Verschlussblech (40) umfasst.

3. Gargerät nach Anspruch 2, **dadurch gekennzeichnet, dass** die Platte (9) aus einem thermisch isolierenden Material eine kalibrierte, konstante Dicke hat.

4. Gargerät nach einem der Ansprüche 1 bis 3, **dadurch gekennzeichnet, dass** es einen Sockel (1) umfasst, an dem die Garplatten (3a, 3b) um eine Achse (X-X') herum montiert und angelenkt sind, die mit ihrer gegenseitigen Gelenkachse zusammenfällt.

5. Gargerät nach Anspruch 4, **dadurch gekennzeichnet, dass** der Sockel (1) derart ausgebildet ist, dass jede der Platten (3a, 3b), allein und/oder zusammen mit der anderen Platte, flach auf den Sockel umgeklappt werden kann, derart, dass sie über ihre dorsale Fläche, in einer horizontalen Position, gegen diesen Sockel zur Abstützung kommt.

6. Gargerät nach Anspruch 4 oder Anspruch 5, **dadurch gekennzeichnet, dass** der Sockel (1) mit Mitteln zur Überwachung und Regelung der elektrischen Versorgung der Widerstände (7) jeder der Platten versehen ist, wobei diese Mittel mit jedem der Elemente (4) durch eine flexible Verkabelung (6) verbunden sind, die weder das Verschwenken der Platten noch das Entnehmen der Elemente aus ihrer Vertiefung heraus behindert.

7. Gargerät nach einem der Ansprüche 1 bis 6, **dadurch gekennzeichnet, dass** jedes der Elemente (4) an der Garplatte mit Hilfe von Schrauben befestigt ist und mit einem bestimmten Spannungsgrad gegen den Boden der Vertiefung angelegt ist.

8. Gargerät nach einem der Ansprüche 1 bis 7, **dadurch gekennzeichnet, dass** es zum Garen einer Teigware auf Basis von Mehl für die Herstellung von Waffeln bestimmt ist, wobei die Garflächen der Platten mit Vertiefungen versehen sind, die für diesen Zweck geeignet sind.
